# EUROPEAN PATENT APPLICATION

(11) **EP 4 848 067 A1**
(43) Date of publication of application: **02.12.2026**
(21) Application number: 26180588.1
(22) Date of filing: 22.05.2026
(51) Int. Cl.: G06F 3/16, G06F 9/451

(54) **METHOD, APPARATUS, DEVICE AND STORAGE MEDIUM FOR PROCESSING REQUEST**

(30) Priority: 30.05.2025 CN 202510727890
(71) Applicant: Beijing Zitiao Network Technology Co., Ltd., Beijing 100190 (CN)
(72) Inventor: TANG, Yang, Beijing, 100028 (CN); WANG, Rui, Beijing, 100028 (CN)
(74) Representative: Marks & Clerk LLP

(57) **Abstract**

According to embodiments of the present disclosure, a method, an apparatus, a device and a storage medium for processing a request are provided. The method includes: obtaining a first user request for a digital assistant; determining, by the digital assistant, a target application matching the first user request from a set of applications associated with a host environment; and sending, by the digital assistant, a first message determined based on the first user request to the host environment, to trigger the target application to present a first interface component for responding to the first user request, where the first interface component is determined from a set of predetermined interface components associated with the target application based on the first user request.

## Description

### FIELD

Example embodiments of the present disclosure generally relate to the field of computers, and in particular, to a method, an apparatus, a device, and a computer-readable storage medium for processing a request.

### BACKGROUND

With the development of computer technologies, a user may achieve interaction with an electronic device through a request, that is, the user may send a user request to the electronic device, and the electronic device may provide a corresponding feedback. For example, the user may search for a desired book through a request or turn on the Bluetooth of the device through a request.

### SUMMARY

In a first aspect of the present disclosure, a method of processing a request is provided. The method includes: obtaining a first user request for a digital assistant; determining, by the digital assistant, a target application matching the first user request from a set of applications associated with a host environment; and sending, by the digital assistant, a first message determined based on the first user request to the host environment, to trigger the target application to present a first interface component for responding to the first user request, where the first interface component is determined from a set of predetermined interface components associated with the target application based on the first user request.

In a second aspect of the present disclosure, an apparatus for processing a request is provided. The apparatus includes: an obtaining module configured to obtain a first user request for a digital assistant; a determining module configured to determine, by the digital assistant, a target application matching the first user request from a set of applications associated with a host environment; and a sending module configured to send, by the digital assistant, a first message determined based on the first user request to the host environment, to trigger the target application to present a first interface component for responding to the first user request, where the first interface component is determined from a set of predetermined interface components associated with the target application based on the first user request.

In a third aspect of the present disclosure, an electronic device is provided. The device includes at least one processor; and at least one memory, the at least one memory being coupled to the at least one processor and storing instructions for execution by the at least one processor, the instructions, when executed by the at least one processor, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

In a fifth aspect of the present disclosure, a computer program product is provided. The computer program product is tangibly stored in a computer storage medium and includes computer-executable instructions, the computer-executable instructions, when executed by a device, causing the device to perform the method of the first aspect.

It should be appreciated that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 shows a schematic diagram of an example environment in which the embodiments of the present disclosure may be implemented;
FIG. 2 shows a flowchart of a process of processing a request according to some embodiments of the present disclosure;
FIGS. 3A to 3C show schematic diagrams of example interfaces according to some embodiments of the present disclosure;
FIG. 4 shows a schematic structural block diagram of an apparatus for processing a request according to some embodiments of the present disclosure; and
FIG. 5 shows a block diagram of an electronic device capable of implementing multiple embodiments of the present disclosure.

### DETAILED DESCRIPTION

The embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for purposes of example, and are not intended to limit the protection scope of the present disclosure.

It should be noted that the titles of any sections/subsections provided herein are not restrictive. Various embodiments are described throughout this article, and any type of embodiments may be included under any section/subsection. In addition, the embodiments described in any section/subsection may be combined in any way with any other embodiments described in the same section/subsection and/or different sections/subsections.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms "first", "second", etc., may refer to different or the same objects. Other explicit and implicit definitions may also be included below.

The embodiments of the present disclosure may involve user data, data obtainment and/or use, etc. These aspects all follow the corresponding laws, regulations and related provisions. In the embodiments of the present disclosure, all data collection, obtainment, processing, machining, forwarding, use, etc., are performed on the premise that the user is aware of and confirms. Accordingly, when implementing various embodiments of the present disclosure, the user should be informed of the type, scope of use, use scenarios, etc. of the data or information that may be involved in an appropriate manner in accordance with relevant laws and regulations, and the authorization of the user should be obtained. The specific manner of informing and/or authorizing may vary according to the actual situation and application scenarios, and the scope of the present disclosure is not limited in this regard.

If the solutions in this specification and embodiments involve personal information processing, the processing will be performed on the premise that there is a legal basis (for example, the consent of the personal information subject is obtained, or it is necessary to perform a contract, etc.), and the processing will only be performed within the scope of regulations or agreements. If the user refuses to process personal information other than the necessary information required for the basic functions, it will not affect the user's use of the basic functions.

As the user has an increasing demand for request processing and the user requests become more diversified, the user also expects to obtain more flexible feedback results. However, the current digital assistant of the electronic device may only help the user to process one or some kinds of user requests, for example, it may only process the user request of the query type, but cannot process the user request of the instruction type, etc. This leads to the inability to meet various scenarios and the diverse needs of users, resulting in a serious lack of flexibility in processing requests.

The embodiments of the present disclosure propose a solution for processing a request. The solution includes: obtaining a first user request for a digital assistant; determining, by the digital assistant, a target application matching the first user request from a set of applications associated with a host environment; and sending, by the digital assistant, a first message determined based on the first user request to the host environment, to trigger the target application to present a first interface component for responding to the first user request, where the first interface component is determined from a set of predetermined interface components associated with the target application based on the first user request.

In this way, the embodiments of the present disclosure are able to apply the digital assistant to determine the target application matching the user request, so that different user requests may be matched to appropriate applications, thereby expanding the range of scenarios that may be used. Moreover, by presenting the corresponding interface component, the user may more conveniently understand the content of the feedback, thereby flexibly processing the user request.

Various example implementations of the solution will be described in detail below in further conjunction with the drawings.

### EXAMPLE ENVIRONMENT

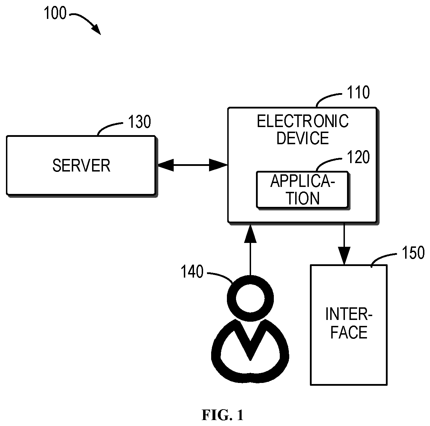

FIG. 1 shows a schematic diagram of an example environment 100 in which the embodiments of the present disclosure may be implemented. As shown in FIG. 1, the example environment 100 may include an electronic device 110.

In this example environment 100, the electronic device 110 may run an application 120 supporting processing a request. The application 120 may be any appropriate type of application for processing a request, examples of which may include but are not limited to: a weather application, a movie viewing application, or other appropriate applications. A user 140 may interact with the application 120 via the electronic device 110 and/or its attached device.

In the environment 100 of FIG. 1, if the application 120 is active, the electronic device 110 may present an interface 150 for supporting processing a request through the application 120.

In some embodiments, the electronic device 110 communicates with a server 130 to implement the provision of the service of the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the electronic device 110 may also support any type of user-specific interface (such as "wearable" circuitry, etc.).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the application 120 supporting processing a request in the electronic device 110.

A communication connection may be established between the server 130 and the electronic device 110. The communication connection may be established by wired or wireless means. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It should be understood that the structure and function of each element in the environment 100 are described for purposes of example only, without suggesting any limitation on the scope of the present disclosure.

Some example embodiments of the present disclosure will be described below with continued reference to the drawings.

### EXAMPLE PROCESS

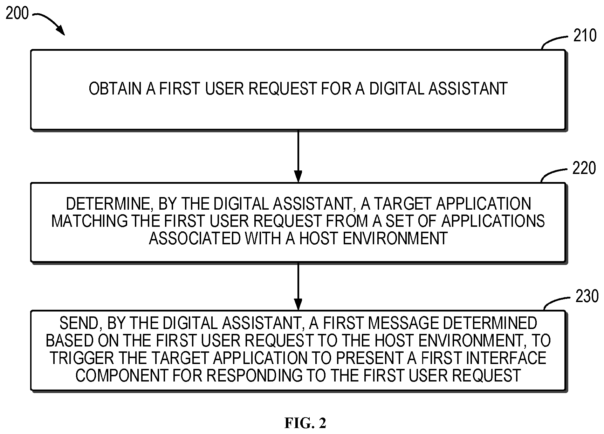

FIG. 2 shows a flowchart of a process 200 of information processing according to some embodiments of the present disclosure. The process 200 may be implemented at the electronic device 110. The process 200 is described below with reference to FIG. 1.

At block 210, the electronic device 110 may obtain a first user request for a digital assistant.

The digital assistant is a software program based on artificial intelligence technologies, which is capable of understanding natural language input and interacting with users through voice, text, etc., to provide users with various services and information. The digital assistant may be applied to quickly retrieve and provide various information, perform tasks, conduct intelligent conversations, control devices, and so on.

For example, the user may directly say "search for today's weather", and then the first user request is to search for today's weather. For another example, the user may also input "search for today's weather", etc. through text input or other forms. Moreover, the embodiments of the present disclosure may be applied to various scenarios, such as movie search, weather search, news push, etc. The service provider may customize response content according to different scenarios, so as to adapt to the user's query needs in different situations.

At block 220, the electronic device 110 may determine, by the digital assistant, a target application matching the first user request from a set of applications associated with a host environment.

In some embodiments, the host environment is an application installed in an operating system, that is, a certain program, component or technology needs to rely on a specific application program installed on the operating system to run. In the embodiments of the present disclosure, the application may be a mini-program. Since the mini-program cannot be directly run in the operating system, the mini-program is run through the host environment. The mini-program refers to a lightweight application program that may be quickly loaded and run. It runs on a host platform and implements specific functions and services by calling interfaces and resources provided by the host platform.

Due to the diversification of user requests, it is necessary to match the user request with a more suitable target application. Moreover, since each mini-program corresponds to one or more intention classifications, a movie-related mini-program corresponding to a movie intention classification, and a weather-related mini-program corresponding to a weather intention classification, the intention of the user request may be determined, and then a mini-program of a corresponding category may be allocated to the user request based on the intention. For example, if the user request is "search for today's weather", the target application may be a weather mini-program. For another example, if the user request is "I would like to see what movies are on recently", the target application may be a movie viewing mini-program. Through this method, the target application associated with the intention of the user request may be applied to perform request processing, thereby being able to use the functions of these professional applications to improve the accuracy of request processing.

At block 230, the electronic device 110 may send, by the digital assistant, a first message determined based on the first user request to the host environment, to trigger the target application to present a first interface component for responding to the first user request.

For example, if the first user request is "search for today's weather", a weather mini-program may be matched, and information related to today's weather, such as temperature, air, etc., may be displayed on the mini-program interface. For another example, if the first user request is "I would like to see what movies are on recently", a movie viewing mini-program may be matched, and information associated with recently released movies may be displayed on the mini-program interface. By presenting the first interface component to the user, it may be ensured that the user may obtain timely and relevant feedback. The weather information is displayed on the interface of the weather mini-program, and the movie viewing information is displayed on the interface of the movie viewing mini-program, so that the user may better understand the content of the feedback through the interface of the target application. In this way, the situation that the same interface is used to display all user requests may be avoided, and the flexibility of request processing is improved.

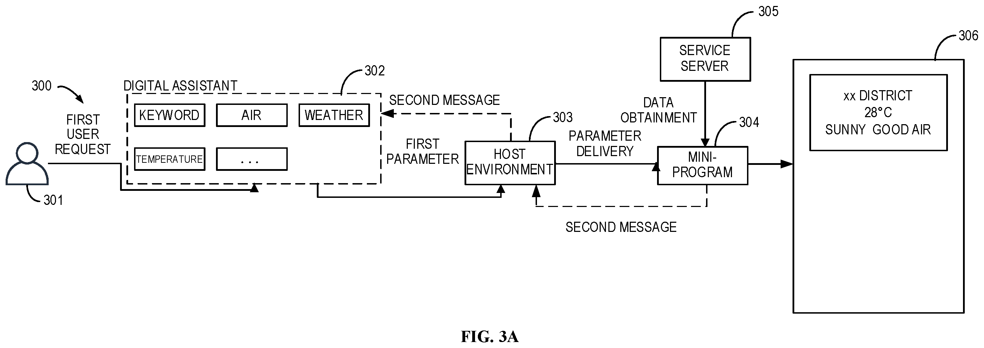

In some embodiments, the electronic device 110 may determine, by the digital assistant, at least one first parameter associated with the target application from the first user request, and then construct the first message based on the at least one first parameter. For example, referring to FIG. 3A, if the user 301 says "search for today's weather", the first user request is "search for today's weather", and then the first parameter may be determined by the digital assistant 302, and the first parameter may include air, weather, temperature, etc. Then the first parameter is sent to the host environment 303 of the mini-program, and the parsed parameter is transparently transmitted to the mini-program 304 by the host environment 303. Then the mini-program 304 obtains relevant data through the service server 305 to complete page rendering, so as to present the first interface component 306 to the user. Moreover, for diverse user needs, the digital assistant may make corresponding fine adjustments to improve the accuracy of the first message.

In some embodiments, a parameter type of the at least one first parameter is determined based on the target application. For example, if the target application is a weather application, the parameter type of the first parameter is determined according to the target application, and it is also a weather parameter type. Through this method, content more relevant to the user intention may be selected from the first user request, to avoid interference information in the first parameter, affecting the overall effect.

In some embodiments, in order to protect user privacy information and data security, desensitization processing may be performed on the first user request. The electronic device 110 may remove, by the digital assistant, protected information from the first user request to construct the first message. For example, if the first user request includes user sensitive information or user identification information, such as name, address, etc., this part of information related to user privacy may be removed, and only the service content related to the service scenario is retained. The service content may include user intention information, query theme information, contextual information, etc., and through the service content, the service provider may accurately understand the user's needs.

In some embodiments, the target application is associated with an agent, and the agent is configured to determine at least one second parameter based on the first message from the host environment. Then the target application is triggered to present the first interface component based on the at least one second parameter. The agent is used to assist the mini-program to implement corresponding functions according to different scenarios, for example, the agent may implement functions such as parameter extraction, statement generalization, interface component loading, and so on.

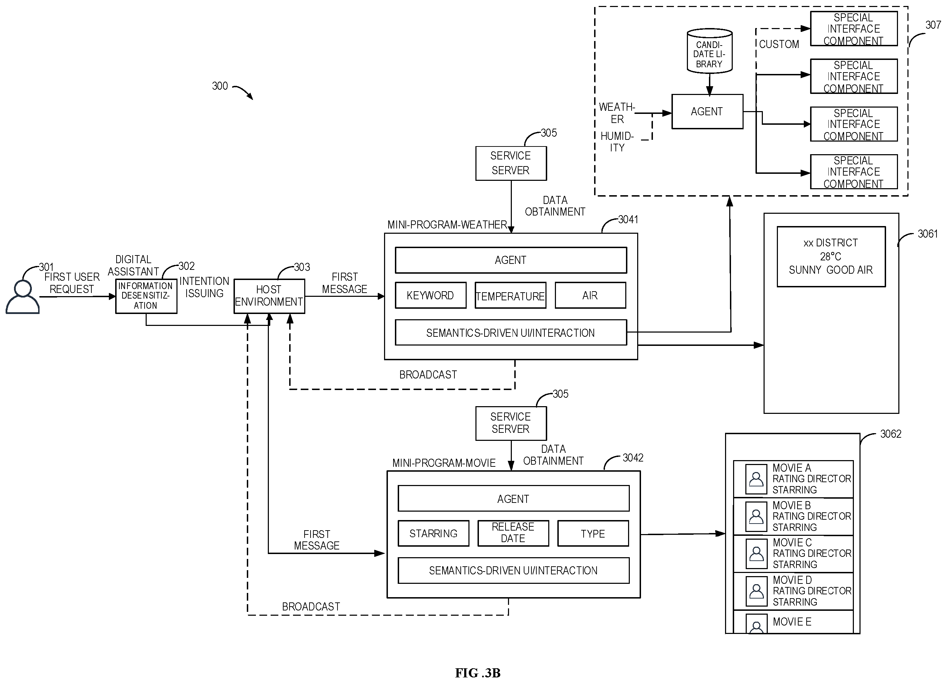

For example, referring to FIG. 3B, if the first user request is "search for today's weather", after receiving the first user request, the digital assistant 302 may perform desensitization on the first user request to obtain the first message, and then route the first message to the agent 3041 of the target application through the host environment 303 according to the user intention. Then the agent 3041 is applied to parse the first message to determine the second parameter, and the second parameter may include temperature, air, etc. Then the first interface component 3061 is presented according to the second parameter, and the user may learn about the day's weather through the first interface component 3061, thereby ensuring that the user may obtain timely and relevant feedback on the interface.

In some embodiments, the first interface component is determined from a set of predetermined interface components associated with the target application based on the first user request. For example, due to the diversity of user requests, a set of predetermined interface components may be predetermined to meet the needs of users. Specifically, referring to block 307 in FIG. 3B, for a weather mini-program, multiple predetermined interface components may be predetermined to display the content fed back for different user requests. For example, an interface component for displaying ultraviolet rays, an interface component for displaying humidity, etc., may be set.

In some embodiments, through pre-registration and classification management, a candidate library available for scheduling may be provided for the agent. After identifying the user intention, the agent may select, match and call, from the candidate library, the most appropriate predetermined interface component for display, thereby more accurately meeting the user needs. In the candidate library, different interface components may be classified and managed according to dimensions such as business type, functional attribute, display form, etc., such as news, weather, tools, etc.

In some embodiments, the candidate library may be dynamically updated, for example, the mini-program may be added, adjusted, optimized, etc., during the operation process, so as to improve the matching accuracy. In addition, when accessing, each mini-program needs to register its own interface component and provide corresponding metadata, such as applicable scenarios, interaction modes, priorities, etc., to ensure that the agent may accurately understand the purpose of the interface component.

The predetermined interface components include a normal interface component and a special interface component. The normal interface component refers to the most general interface that has been preset in the mini-program. Referring to FIG. 3B, the normal interface component corresponding to the weather mini-program includes the day's temperature, the day's weather conditions, and the day's air conditions, which is the most general information for the weather field. That is to say, if it is determined that the user just needs this information according to the input content, the normal interface component may be directly displayed.

The special interface component is also an interface predetermined in the mini-program, but its generality is lower than that of the normal interface component. For example, the special interface component may include an ultraviolet-related interface component for displaying ultraviolet conditions at different times of the day; a humidity-related interface component for displaying humidity conditions at different times of the day, and so on. For example, if the first user request is "is the ultraviolet strong today", the mini-program may present the ultraviolet-related interface component to the user.

In addition, if the interface predetermined in the mini-program does not include the information that the user expects to obtain, a custom interface may also be provided, that is, a brand-new interface may be generated according to the target content, and the target content required by the user may be presented to the user in the interface. For example, if the user wants to know the temperature comparison in the past seven days, a custom interface may be presented to the user. In this way, the display content and style of the interface component may be flexibly adjusted according to different user queries and demand changes, so that the user experience is more personalized.

In some embodiments, the agent may parse the user intention according to the first user request, and select, from the candidate library, the interface component that best meets the requirements for display. For example, if the user says "view today's weather conditions", the agent selects a weather interface component from the candidate library and determines how to display the interface to better meet the user needs. Through user behavior data, such as clicks, stay time, usage frequency, etc., the agent may also self-learn to optimize the interface component recommendation logic, so that subsequent matching is more accurate.

In this way, the embodiments of the present disclosure may be applied to different types of mini-programs without the need to separately develop matching logic for each mini-program, thereby improving expandability. Moreover, through bidirectional matching between the user intention and the candidate library, fixed interface display logic may be avoided, and content that better meets user needs may be provided. Furthermore, by combining user historical preferences to intelligently recommend the optimal interface component, the user experience and interaction efficiency may be improved.

In some embodiments, since the content in the first interface component may not be able to meet the needs of the user, the user may continue to input a user request. The electronic device 110 may trigger, by the digital assistant, a response action for the second user request based on contextual information in response to receiving a second user request, the contextual information being determined based on the second message. For example, if the user says "search for today's weather", the first interface component is presented in the target application to facilitate the user to learn about today's weather conditions, but the first interface component still cannot meet the user's needs, so the user then says "is the ultraviolet strong today", and "is the ultraviolet strong today" is the second user request. The digital assistant may trigger the response action for the second user request according to the contextual information, such as switching the interface, pressing a button, etc.

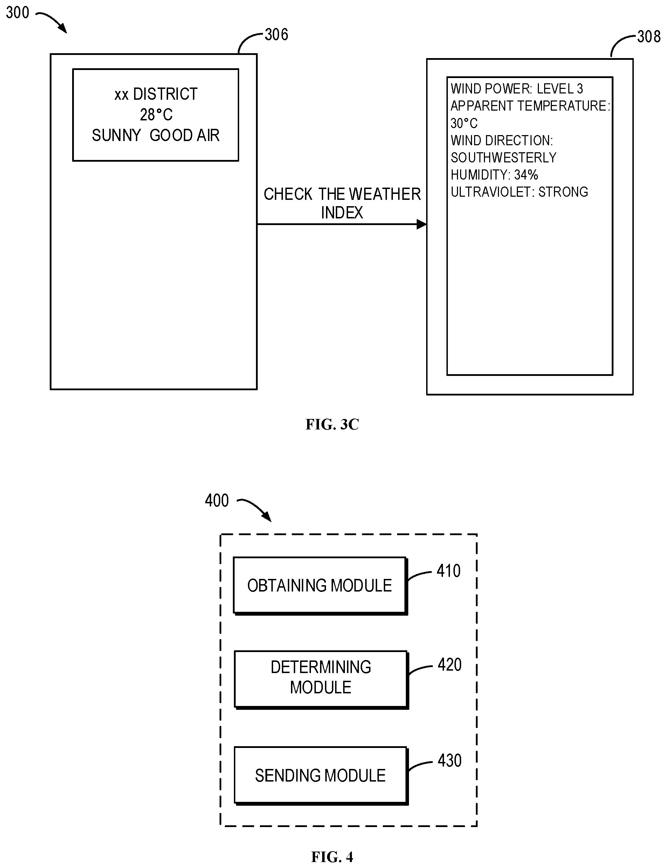

In some embodiments, the electronic device 110 may send, in response to determining that the second user request matches the target application, by the digital assistant, a second message determined based on the second user request to the host environment, to trigger the target application to present a second interface component for responding to the second user request. For example, referring to FIG. 3C, if the user says "search for today's weather", the determined target application is an application associated with the weather, and the first interface component 306 is presented to the user. Then it is detected that the user says "check the weather index". Since the second user request is also content associated with the weather, it matches the target application. Then the digital assistant may send a second message determined based on the second user request to the host environment, the second message being related to the contextual information, and the target application may present the second interface component 308, so that the user may learn about the day's weather index according to the second interface component.

In some embodiments, in order to improve interactivity with the user, the agent associated with the target application is configured to determine, based on the second message, that the second user request matches an interaction operation for the first interface component. Then a control instruction associated with the interaction operation is sent to the target application, to trigger the first interface component to be switched to the second interface component. For example, the interaction logic may be encapsulated into a tool method and provided to the agent for calling. When the agent identifies that the user's intention requires a click operation to be performed, the corresponding jump logic may be directly triggered to complete the automated operation.

For example, in scenarios such as driving and sports where manual operation is not convenient, after seeing the first interface component, the user needs to know more information, and the agent may parse the user's intention and determine the detailed content that the user desires to view. Then the relevant information on the first interface component is matched to determine a clickable element. Next, the encapsulated click jump user is called to automatically simulate the user's click operation, and the second interface component is jumped to from the first interface component to display the information required by the user. Through this method, the click jump may be automatically completed when it is inconvenient for the user to perform manual operations, thereby reducing interaction costs.

For another example, referring to FIG. 3B, if the user says "I would like to see what movies are on recently", the first interface component 3062 is displayed. Then the user says "I would like to see the synopsis of movie B", an element related to the movie B in the first interface component may be determined as an interactive element, and then the click element is automatically clicked to jump to the second interface component, the second interface component including content related to the synopsis of the movie B. In this way, when the user has other needs, the system may jump from the current interface without reopening a new interface, thereby maintaining the fluency of operation and improving the efficiency of use.

In some embodiments, after the interface component is presented, the user may also more easily grasp the required content through the form of broadcasting, thereby improving interaction efficiency. The electronic device 110 may receive a second message from the host environment, the second message is associated with the first interface component. For example, after the first interface component is presented to the user, the second message donated by the mini-program may be obtained based on the host environment, and the second message is associated with the first interface component.

In some embodiments, the electronic device 110 may provide, by the digital assistant, first speech content associated with the first interface component based on the received second message. For example, after the second message is obtained, the second message may be summarized and then directly broadcast, and the broadcast content is the first speech content associated with the first interface component. In addition, the electronic device 110 may provide second speech content associated with the first interface component by the agent. That is, in the case that the mini-program has no agent, the digital assistant may broadcast; and in the case that the mini-program has an agent, the agent may directly broadcast.

The embodiments of the present disclosure may improve the user experience through intelligent information processing and dynamic interface presentation, to ensure that the system may quickly adapt to changing market needs and user expectations. Moreover, by separating the logic to the service provider, the technical team may focus on the development of core functions without frequently modifying the logic of the digital assistant. This hierarchical architecture not only improves the flexibility of the system, but also effectively reduces the development and maintenance costs. In addition, when the product requirements change, the service provider may quickly respond, and by updating the model and adjusting the display logic, it is ensured that the system can always meet the new needs of users.

### EXAMPLE APPARATUS AND DEVICE

The embodiments of the present disclosure further provide corresponding apparatuses for implementing the above methods or processes. FIG. 4 shows a schematic structural block diagram of an example apparatus 400 for processing a request according to some embodiments of the present disclosure. The apparatus 400 may be implemented as or included in the electronic device 110. Each module/component in the apparatus 400 may be implemented by hardware, software, firmware, or any combination thereof.

As shown in FIG. 4, the apparatus 400 includes: an obtaining module 410 configured to obtain a first user request for a digital assistant; a determining module 420 configured to determine, by the digital assistant, a target application matching the first user request from a set of applications associated with a host environment; and a sending module 430 configured to send, by the digital assistant, a first message determined based on the first user request to the host environment, to trigger the target application to present a first interface component for responding to the first user request, where the first interface component is determined from a set of predetermined interface components associated with the target application based on the first user request.

In some embodiments, the apparatus 400 is further configured to determine, by the digital assistant, at least one first parameter associated with the target application from the first user request; and construct the first message based on the at least one first parameter.

In some embodiments, a parameter type of the at least one first parameter is determined based on the target application.

In some embodiments, the apparatus 400 is further configured to remove, by the digital assistant, protected information from the first user request to construct the first message.

In some embodiments, the target application is associated with an agent, and the agent is configured to: determine at least one second parameter based on the first message from the host environment; and trigger the target application to present the first interface component based on the at least one second parameter.

In some embodiments, the apparatus 400 is further configured to receive a second message from the host environment, the second message being associated with the first interface component.

In some embodiments, the apparatus 400 is further configured to provide, by the digital assistant, speech content associated with the first interface component based on the received second message.

In some embodiments, the apparatus 400 is further configured to trigger, by the digital assistant, a response action for the second user request based on contextual information in response to receiving a second user request, the contextual information being determined based on the second message.

In some embodiments, the apparatus 400 is further configured to send, in response to determining that the second user request matches the target application, by the digital assistant, a second message determined based on the second user request to the host environment, to trigger the target application to present a second interface component for responding to the second user request.

In some embodiments, the agent associated with the target application is configured to: determine, based on the second message, that the second user request matches an interaction operation for the first interface component; and send a control instruction associated with the interaction operation to the target application, to trigger the first interface component to be switched to the second interface component.

In some embodiments, the apparatus 400 is further configured to provide second speech content associated with the first interface component by the agent.

In some embodiments, the host environment is an application installed in an operating system.

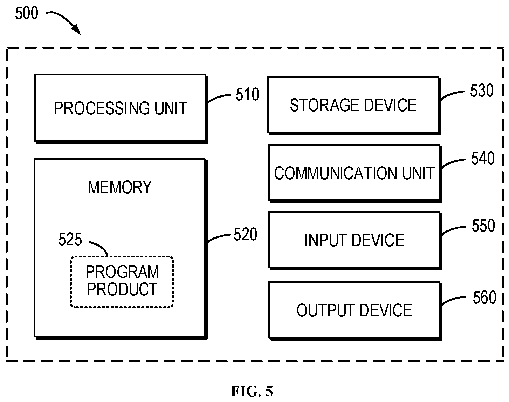

As shown in FIG. 5, the electronic device 500 is in the form of a general electronic device. The components of the electronic device 500 may include, but are not limited to, at least one processor 510 or processing unit, a memory 520, a storage device 530, one or more communication units 540, one or more input devices 550, and one or more output devices 560. The processor 510 may be an actual or virtual processor and may perform various processes based on the programs stored in the memory 520. In a multi-processor system, multiple processors execute computer-executable instructions in parallel to improve the parallel processing capability of the electronic device 500.

The electronic device 500 typically includes multiple computer storage media. Such media may be any available medium that is accessible to the electronic device 500, including, but not limited to, volatile and non-volatile media, removable and non-removable media. The memory 520 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in FIG. 5, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 520 may include a computer program product 525, which has one or more program modules configured to perform various methods or acts of the various embodiments of the present disclosure.

The communication unit 540 enables communication with other electronic devices through the communication medium. Additionally, the functions of the components of the electronic device 500 may be implemented by a single computing cluster or multiple computing machines, and the multiple computing machine may communicate through a communication connection. Therefore, the electronic device 500 may use a logical connection with one or more other servers, a network personal computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) through the communication unit 540 according to needs, the external devices such as a storage device, a display device, etc., communicate with one or more devices that enable the user to interact with the electronic device 500, or communicate with any devices (for example, a network card, a modem, etc.) that enable the electronic device 500 to communicate with one or more other electronic devices. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices and computer program products implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to the processor of a general-purpose computer, a special-purpose computer, or other programmable data processing apparatus to produce a machine, such that these instructions, when executed by the processor of the computer or other programmable data processing apparatus, create means for implementing the functions/acts specified in one or more blocks of the flowcharts and/or block diagrams. These computer-readable program instructions may also be stored in a computer-readable storage medium, these instructions cause the computer, the programmable data processing apparatus and/or other devices to work in a specific way, so that the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operation steps are performed on the computer, the another programmable data processing apparatus or the other devices to produce a computer-implemented process, so that the instructions executed on the computer, the another programmable data processing apparatus, or the other devices implement the functions/acts specified in one or more blocks of the flowcharts and/or block diagrams.

The flowcharts and block diagrams in the drawings show the possibly implemented architectures, functions and operations of the systems, methods and computer program products according to multiple implementations of the present disclosure. In this regard, each block in the flowchart or block diagram may represent a module, program segment or part of an instruction, and the module, program segment or part of an instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a special-purpose hardware-based system that executes specified functions or acts, or may be implemented by a combination of special-purpose hardware and computer instructions.

Various implementations of the present disclosure have been described above, and the above description is for purposes of example, non-exhaustive, and not limited to the disclosed implementations. Without departing from the scope of the illustrated implementations, many modifications and changes will be apparent to those of ordinary skill in the art. The choice of terms used herein is intended to best explain the principles of each implementation, the practical application or improvement to the technology in the market, or to enable other ordinary skilled in the art to understand each implementation disclosed herein.

## Claims

1. A method (200) of processing a request, comprising:
obtaining (210) a first user request for a digital assistant;
determining (220), by the digital assistant, a target application matching the first user request from a set of applications associated with a host environment; and
sending (230), by the digital assistant, a first message determined based on the first user request to the host environment, to trigger the target application to present a first interface component for responding to the first user request, wherein the first interface component is determined from a set of predetermined interface components associated with the target application based on the first user request.

2. The method (200) of claim 1, further comprising:
determining, by the digital assistant, at least one first parameter associated with the target application from the first user request; and
constructing the first message based on the at least one first parameter.

3. The method (200) of claim 2, wherein a parameter type of the at least one first parameter is determined based on the target application.

4. The method (200) of any one of the preceding claims, further comprising:
receiving a second message from the host environment, the second message being associated with the first interface component.

5. The method (200) of claim **4,** further comprising:
providing, by the digital assistant, first speech content associated with the first interface component based on the received second message.

6. The method (200) of any one of the preceding claims, further comprising:
removing, by the digital assistant, protected information from the first user request to construct the first message.

7. The method (200) of any one of the preceding claims, wherein the target application is associated with an agent, the agent being configured to:
determine at least one second parameter based on the first message from the host environment; and
trigger the target application to present the first interface component based on the at least one second parameter.

8. The method (200) of claim 7, further comprising:
providing, by the agent, second speech content associated with the first interface component.

9. The method (200) of claim 4 or 5 or of any one of claims 6 to 8 when dependent on at least claim 4, further comprising:
triggering, by the digital assistant, a response action for a second user request based on contextual information in response to receiving the second user request, the contextual information being determined based on the second message.

10. The method (200) of claim 9, wherein triggering, by the digital assistant, the response action for the second user request based on the contextual information comprises:
sending, in response to determining that the second user request matches the target application, by the digital assistant, a second message determined based on the second user request to the host environment, to trigger the target application to present a second interface component for responding to the second user request, and and optionally,
wherein an agent associated with the target application is configured to:
determine, based on the second message, that the second user request matches an interaction operation for the first interface component; and
send a control instruction associated with the interaction operation to the target application, to trigger the first interface component to be switched to the second interface component.

11. The method (200) of any of claims 1 to 10, wherein the host environment is an application installed in an operating system.

12. An apparatus (400) for processing a request, comprising:
an obtaining module (410) configured to obtain a first user request for a digital assistant;
a determining module (420) configured to determine, by the digital assistant, a target application matching the first user request from a set of applications associated with a host environment; and
a sending module (430) configured to send, by the digital assistant, a first message determined based on the first user request to the host environment, to trigger the target application to present a first interface component for responding to the first user request, wherein the first interface component is determined from a set of predetermined interface components associated with the target application based on the first user request.

13. An electronic device (500), comprising:
at least one processor (510); and
at least one memory (520), the at least one memory (520) being coupled to the at least one processor (510) and storing instructions for execution by the at least one processor (510), the instructions, when executed by the at least one processor (510), causing the electronic device (500) to perform the method (200) of any of claims 1 to 11.

14. A computer-readable storage medium having computer-executable instructions stored thereon, the computer-executable instructions are executable by a processor to implement the method of any of claims 1 to 11.

15. A computer program product tangibly stored in a computer storage medium and comprising computer-executable instructions, the computer-executable instructions, when executed by a device, causing the device to perform the method of any of claims 1 to 11.
